Europäisches Patentamt

European Patent Office

Office européen des brevets

(11) Veröffentlichungsnummer: **0 249 905**
**A2**

## EUROPÄISCHE PATENTANMELDUNG

(21) Anmeldenummer: 87108512.2

(22) Anmeldetag: 12.06.87

(51) Int. Cl.⁴: **G01L 1/20**

(30) Priorität: 18.06.86 DE 3620360

(43) Veröffentlichungstag der Anmeldung:
23.12.87 Patentblatt 87/52

(84) Benannte Vertragsstaaten:
AT BE CH DE ES FR GB IT LI NL SE

(71) Anmelder: Pfister GmbH
Stätzlinger Strasse 70
D-8900 Augsburg(DE)

(72) Erfinder: Häfner, Hans W.
Fichtenweg 15
D-8890 Aichach-Walchshofen(DE)

(74) Vertreter: Kahler, Kurt, Dipl.-Ing. et al
Postfach 248 Unggenried 17
D-8948 Mindelheim(DE)

(54) Elstostatische Kraftmesseinrichtung.

(57) Elastostatische Kraftmeßeinrichtung mit einem topfartigen Grundkörper, in den ein Kolben eingesetzt ist, wobei zwischen der Stirnfläche des Kolbens und dem Boden des Grundkörpers ein elastomerer Stoff angeordnet ist, der mit mindestens einem Drucksensor in Kontakt ist, wobei zwischen dem Umfangsmantel des Kolbens und der zylindrischen Innenfläche des Grundkörpers ein enger Ringspalt gebildet ist, der im wesentlichen ganz mit elastomerem Stoff gefüllt ist, wobei der topfartige Grundkörper 18 durch ein an seiner Unterseite angebrachtes, eine elastomere Platte aufweisendes Topflager gehalten ist.

Fig. 2

EP 0 249 905 A2

## ELASTOSTATISCHE KRAFTMESSEINRICHTUNG

Die Erfindung betrifft eine elastostatische Kraftmeßeinrichtung gemäß dem Oberbegriff des Patentanspruchs 1.

Beim Einsatz von Kraftmeßzellen zum Wiegen an Bunkern oder Brückenwaagen muß dafür gesorgt werden, daß die Kraftmeßzellen entsprechende Freiheitsgrade besitzen, die Vertikal-, Horizontal-und Winkelbewegungen des Bunkers bzw. der Brückenwaage erlauben. Andererseits ist darauf zu achten, daß derartige Bewegungen verhältnismäßig eng begrenzt werden, da sonst die Gefahr einer Zerstörung der Kraftmeßzelle besteht. Hierzu ist es beispielsweise bekannt, eine seitliche Bewegung der Kraftmeßzelle dadurch zu ermöglichen, daß die Kraftmeßzelle auf einer nach unten gewölbten Kalotte aufgesetzt ist und der obere Krafteinleitungspunkt über eine in einer kugelförmigen Vertiefung eingesetzte Kugel erfolgt. Es ist aber immer noch erforderlich die Kraftmeßzelle durch Lenker und Anschläge gegen Überlastung auf Grund von Drehung und Horizontalkräften abzustützen. Am Krafteinleitungspunkt kann auch als Zwischenlage eine elastomere Platte vorge sehen sein. Allerdings ist eine statische Reibung zu überwinden, die in der Größenordnung von 5% liegen kann und die üblichen Kraftmeßzellen über Gebühr belastet. Es war bisher deshalb erforderlich, Ausgleichselemente wie Lenker oder dergleichen vorzusehen. Aus der Gebrauchsmusterschrift 8534719.1 ist eine Kraftmeßeinrichtung mit topfartigem Abstützteil bekannt, in das ein kolbenartiges Kraftaufnahmeteil eingesetzt ist, wobei zwischen der Stirnfläche des Kraftaufnahmeteils und dem Boden des Abstützteils sowie zwischen dem Umfangsmantel des Kraftaufnahmeteils und der zylindrischen Innenfläche des Abstützteiles ein elastomerer Stoff angeordnet ist, der mit mindestens einem Drucksensor in Kontakt ist. Diese Kraftmeßeinrichtung hat den Vorteil, daß jegliche Querkräfte vom elastomeren Stoff ohne Reibung auf das Abstützteil übertragen werden.

Der Erfindung liegt die Aufgabe zugrunde diese Kraftmeßeinrichtung in einfacher Weise mit entsprechenden Freiheitsgraden auszustatten. Ferner soll die Kraftmeßeinrichtung möglichst geringe Höhe haben.

Diese Aufgabe wird gemäß der Erfindung gelöst durch eine Kraftmeßeinrichtung mit den Merkmalen des Kennzeichens des Patentanspruchs 1.

Da alle Querkräfte über den elastomeren Stoff zum Abstützteil abgeleitet werden, ergeben sich ideale Freiheitsgrade für die Kraftmeßzelle, so daß keine gesonderten Maßnahmen wie Lenker oder dergleichen erforderlich sind, um die Querkräfte aufzufangen.

Die Erfindung betrifft auch eine Bunker-oder Brückenwaageneinrichtung, die mit derartigen Kraftmeßeinrichtungen ausgestattet ist.

Bevorzugte Weiterbildungen der Erfindung ergeben sich aus den Unteransprüchen.

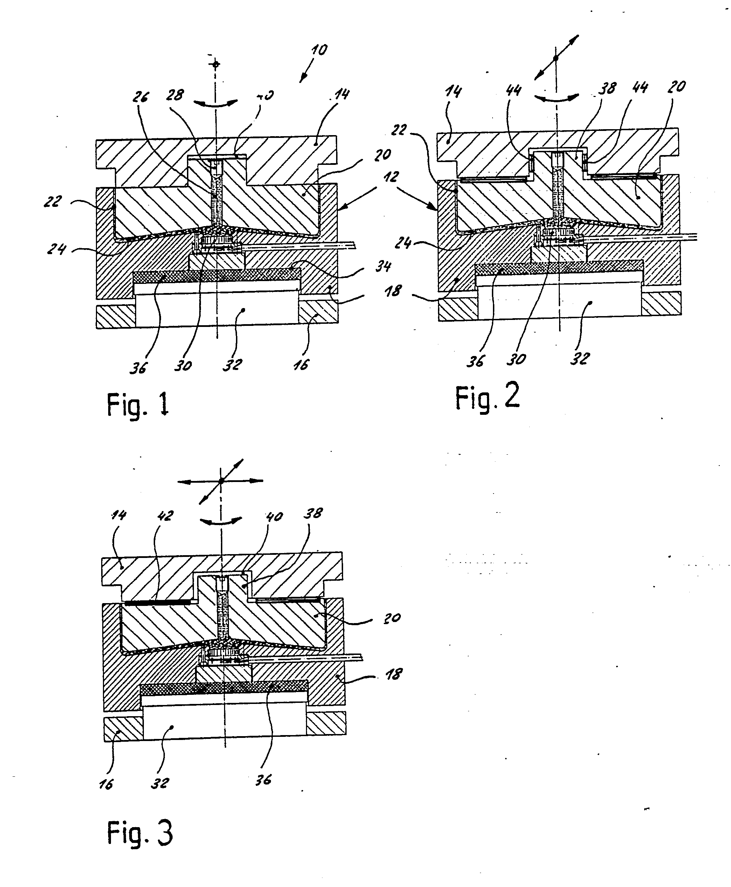

Weitere Merkmale und Vorteile der erfindungsgemäßen Kraftmeßeinrichtung ergeben sich aus der nachfolgenden Beschreibung von Ausführungsbeispielen an Hand der Zeichnung. Es zeigen die Figuren 1 bis ·3 Schnittansichten von Ausführungsbeispielen der erfindungsgemäßen Kraftmeßeinrichtung mit unterschiedlichen Freiheitsgraden.

Gemäß den Figuren besitzt eine Kraftmeßeinrichtung 10 der Ausführungsbeispiele eine elastostatische Kraftmeßzelle 12, über der ein Krafteinleitungselement 14 angeordnet ist und die von einem Abstützteil 16 gehalten wird. Die elastostatische Kraftmeßzelle 12 weist einen topfförmigen Körper 18 auf, in dem ein Kolben 20 geführt ist, der mit der zylindrischen Innenfläche des topfförmigen Körpers 18 einen verhältnismäßig engen Ringspalt 22 bildet. Dieser Ringspalt 22 sowie der Boden des topfförmigen Körpers sind mit elastomerem Stoff gefüllt. (Vgl. G8534719)

In Abweichung zu der bekannten Kraftmeßeinrichtung nach dem genannten Gebrauchsmuster ist die untere Stirnfläche 24 des Kolbens 20 zur Längsachse des Kolbens hin vom Rand nach oben gezogen zu einer zentralen Bohrung 26, die von oben her mittels eines Stöpsels 28 oder dergleichen verschließbar ist. Der besondere Vorteil dieser Ausbildung besteht darin, daß bei der bei der bekannten Kraftmeßeinrichtung verwendeten Herstellung durch Rotieren der Kraftmeßeinrichtung mittels eines Karussells die Luftblasen zum Inneren hingetrieben und über die Bohrung 26 entfernt werden, während bei der bekannten Kraftmeßeinrichtung der Boden nach unten hin gewölbt oder kegelartig ausgeformt ist und die Blasen durch ein Ringspalt ausgetrieben werden. Die erfindungsgemäße Form führt zu einer geringeren Bauhöhe. Es sei darauf hingewiesen, daß diese spezielle Ausbildung der erfindungsgemäßen Kraftmeßeinrichtung von allgemeiner erfinderischer Bedeutung ist.

In den Boden des topfförmigen Körpers 12 ist ein Drucksensor 30 eingelassen, der den auf den elastomeren Stoff vom Kolben 20 ausgeübten Druck feststellt und in geeigneter Weise zur Auswertung bringt.

Die voranstehende Beschreibung der Grundelemente der erfindungsgemäßen Kraftmeßeinrichtung gilt im wesentlichen für alle drei Ausführungsbeispiele gemäß den Fig. 1 bis 3. Diesen ist auch die Ausbildung des Abstützteils 16 gemeinsam, die einen zentralen Kolben 32 besitzt der in eine dazu komplementäre Vertiefung 34 an der Unterseite des topfförmigen Körpers gegen eine Elastomerscheibe 36 drückt.

Der Kolben 20 besitzt einen zentralen Ansatz 38 an seiner Oberseite der in eine entsprechende Vertiefung 40 an der Unterseite des Kraftaufnahmeelements 14 ragt. Das Kraftaufnahmeelement 14 besitzt eine flächige Oberseite, die in geeigneter Weise mit Teilen des Bunkers bzw. einer Waagenbrücke in Verbindung steht und deren Krafteinwirkung aufnimmt. Die flächige Ausbildung des Kraftaufnahmeelements 14 ermöglicht eine stabile Verbindung zum Bunker bzw. zur Waagenbrücke und eine gleichmäßige Kraftaufnahme.

Bei der Ausführungsform nach Fig. 1 könnte der Kolben 20 einstückig mit dem Kraftaufnahmeelement 14 ausgeführt sein, denn diese Ausführungsform bietet nur den kardanischen Freiheitsgrad, der ein Schwenken des Bunkers bzw. der Waagenbrücke erlaubt. Bei der Ausführungsform nach Fig. 3 ergibt sich zusätzlich ein Freiheitsgrad sowohl in X-als Y-Richtung, dadurch daß zwischen dem Kraftaufnahmeelement 14 und dem Kolben 20 eine Kunststoffscheibe 42 eingelegt ist, die gegenüber den Metallflächen des Kraftaufnahmeelements 14 und des Kolbens 20 eine geringe Reibung aufweist. Das Material für die Kunststoffscheibe kann beispielsweise Polytetrafluoräthylen (Teflon) sein. Bei dieser Ausführungsform ist zu beachten, daß zwischen dem Ansatz 38 und den Wänden der Vertiefung 40 ein ausreichender Abstand vorhanden ist, der eine Horizontalbewegung des Kraftaufnahmeelements 14 bezüglich des Kraftmeßelements 12 erlaubt. Die Kunststoffscheibe 42 wird bevorzugt in Aussparungen untergebracht, die auf der Oberseite des Kolbens 20 und/oder der Unterseite des Kraftaufnehmerelements 14 angebracht sind.

Fig. 2 zeigt eine weitere Ausführungsform, bei der eine Querbewegung des Kraftaufnahmeelements 14 nur in einer Richtung z.B. der X-Richtung gegeben ist. Dabei wird zwischen dem Ansatz 38 und der zylindrischen Fläche der Vertiefung 40, die beide rechteckig, bevorzugt quadratisch sind, an nur zwei sich gegenüberliegenden Seiten je eine Teflonscheibe 44 eingesetzt, so daß eine Bewegung des Kraftaufnahmeelements lediglich in Richtung senkrecht zur Zeichenebene möglich ist. Die Kunststoffscheiben sind mit Schmiertaschen versehen, die der Speicherung eines Schmierstoffes zur Sicherung der Dauerschmierung der Gleitflächen dienen.

Es sei daraufhingewiesen, daß die bei den Ausführungsbeispielen verwendete Abstützung zwischen den Kolben 32, der Elastomerplatte 36 in der Vertiefung 34 ein kardanisch wirkendes Topflager darstellt, das vom Prinzip her ein Festlager ist, bei dem Verdrehungen oder Schwenkbewegungen um die Horizontalachse durch Verformung der Elastomerplatte 36 ermöglicht wird. Das verwendete Elastomer hält unter allseitigem Druck sein Volumen konstant und ist damit inkompressibel. Der Kolben 32 verhindert ein Auspressen der Elastomerplatte.

Mit den erfindungsgemäßen Ausführungsformen der Kraftmeßeinrichtung lassen sich entsprechende Lagerungen für einen Bunker, eine Waagenbrücke oder dergleichen zusammenstellen. Bei einer Dreipunktlagerung sind folgende Freiheitsgrade erforderlich:

Eine Kraftmeßeinrichtung mit kardanischem Festpunkt (Fig. 1), eine Kraftmeßeinrichtung mit kardanischem Festpunkt und mit horizontalem Freiheitsgrad in X-Richtung und eine Kraftmeßeinrichtung mit kardanischem Festpunkt und zwei Freiheitsgraden in X-und Y-Richtung. (Fig. 3)

Bei vier Abstützpunkten ist zusätzlich noch eine Kraftmeßeinrichtung nach Fig. 3 erforderlich.

Die Paarungen der Werkstoffe der Kraftmeßeinrichtung werden so gewählt, daß sich eine möglichst kleine Bauform bei hoher Überlastungsgrenze ergibt.

Es sei darauf hingewiesen, daß die Meßzelle 12 bezüglich der Ausbildung der Unterseite des Kolbens 20 auch anders ausgeführt sein kann, etwa mit vorstehendem Kegel. Die erfindungsgemäß verwendete Form besitzt jedoch den Vorteil, daß damit eine sehr niedrige Bauhöhe erreicht werden kann, obwohl ein verhältnismäßig hoher Ringspalt 22 verwendet wird.

Ferner ist zu beachten, daß für alle drei Ausführungsformen im wesentlichen die gleichen Grundelemente verwendet werden können.

Wie bereits eingangs erwähnt, besitzt die erfindungsgemäße Kraftmeßeinrichtung den Vorteil, daß durch den elastomeren Stoff im Ringspalt 22 Querkräfte vom Kolben 20 auf den topfförmigen Körper 18 und das Abstützteil 16 übertragen werden, und daß erst bei höheren Kräften, die die Reibung zwischen den Metallflächen des Kraftaufnahmeelements und des Kolbens und der Teflonscheibe überwinden, ein Verschieben des Kraftaufnahmeelements 14 bezüglich der Meßzelle 12 erfolgt. Da kein Durchbiegen des Kolbens oder des Abstützteils auftritt, ergibt sich auch kein Schwenken des Bunkers oder der Waagenbrücke. Die erfindungsgemäßen Kraftmeßeinrichtungen können beispielsweise mit 100t belastet werden und haben in dieser Ausführungsform etwa einen Durchmesser von 200mm.

Obwohl die Verbindung zwischen Kraftaufnahmeelement 14 und dem Kolben 20 durch einen Ansatz am Kolben 20 erfolgt, kann auch eine gerade, komplementäre Verbindung verwendet werden. Es ist auch nicht erforderlich ein zentralen Ansatz zu verwenden. Statt dessen könnte auch ein entsprechender Umfangsrand am Kolben zum Einsatz kommen.

Voranstehend wurde eine Kraftmeßeinrichtung beschrieben, die vollständig "absturzsicher" ist und auf Grund der großen Spaltflächen erhebliche Querkräfte aufnehmen kann. Selbst bei großer Überlastung erfolgt noch keine Zerstörung der Kraftmeßzelle, sondern das Ausmaß der Bewegung wird dadurch begrenzt, daß der Kolben mit seinem Mantel an der Innenfläche des topfförmigen Körpers zum Anliegen kommt.

Die zur Mitte hin nach oben gezogene kegelförmige Vertiefung hat nicht nur den Vorteil, daß trotz geringer Bauhöhe ein verhältnismäßig hoher Spalt erzielt werden kann, sondern daß auch beim Schleuderguß der Winkel am Scheitel des Karussels für einen bestimmten, gegebenenfalls großen Durchmesser der Kraftmeßeinrichtung kleiner sein kann als bei der bekannten Einrichtung, bei der die untere Stirnfläche des Kolbens nach unten gewölbt ist.

Es sei daraufhingewiesen, daß das stützende Topflager auch umgekehrt ausgebildet sein kann, also mit einer Ausnehmung im Abstützteil 16 und einem Kolben an der Unterseite des Grundkörpers 12. Das Gleiche gilt für die Anordnung und Ausbildung der Elemente 12,20.

## Ansprüche

1. Elastostatische Kraftmeßeinrichtung mit einem topfartigen Grundkörper, in den ein Kolben eingesetzt ist, wobei der Raum zwischen Stirnfläche des Kolbens und dem Boden des Grundkörpers, sowie ein zwischen dem Umfangsmantel des Kolbens und der zylindrischen Innenfläche des Grundkörpers ausgebildeteter engen Ringspalt, der mit mindestens einem Drucksensor in Kontakt ist, im wesentlichen ganz mit elastomeren Stoff gefüllt ist, dadurch gekennzeichnet, daß der topfartige Grundkörper (18) durch ein an seiner Unterseite angebrachtes, eine elastomere Platte (36) aufweisendes Topflager gehalten ist.

2. Kraftmeßeinrichtung nach Anspruch 1, dadurch gekennzeichnet, daß zwischen der Oberseite des Kolbens (20) und der Unterseite eines flächig ausgebildeten Kraftaufnahmeelement (14) eine Kunststoffscheibe eingesetzt ist, die einen geringen Reibungskoeffizienten bezüglich der Oberflächen des Kraftaufnahmeelements (14) und der Stirnfläche des Kolbens (20) aufweist.

3. Kraftmeßeinrichtung nach Anspruch 1 oder 2, dadurch gekennzeichnet, daß auf der Oberseite des Kolbens (20) bzw. der Unterseite des Kraftaufnahmeelements (14) einander gegenüberliegende senkrechte Flächen vorgesehen sind, die miteinander einen Spalt (40) bilden.

4. Kraftmeßeinrichtung nach Anspruch 3, dadurch gekennzeichnet, daß in zwei zueinander parallel verlaufenden Spalten je eine Kunststoffscheibe (44) mit geringem Reibungskoeffizienten zu den Flächen angeordnet sind.

5. Kraftmeßeinrichtung insbesondere nach einem der vorhergehenden Ansprüche, dadurch gekennzeichnet, daß der Boden des Kolbens (20) konkav gewölbt ist und der Kolben (20) eine von oben verschließbare Bohrung (26) aufweist.

6. Bunker,-Brückenwaagen-oder dergleichen Einrichtung, bei der der Bunker bzw. die Waagenbrücke oder dergleichen auf mehreren in Abstand voneinander angeordneten Kraftmeßeinrichtungen abgestützt ist, dadurch gekennzeichnet, daß Kraftmeßeinrichtungen gemäß den vorhergehenden Ansprüchen mit unterschiedlichen Freiheitsgraden verwendet werden.

Fig. 1

Fig. 2

Fig. 3